(19) Europäisches Patentamt
European Patent Office
Office européen des brevets

(11) **EP 3 959 806 B1**

(12) **EUROPÄISCHE PATENTSCHRIFT**

(45) Veröffentlichungstag und Bekanntmachung des Hinweises auf die Patenterteilung:
**16.08.2023 Patentblatt 2023/33**

(21) Anmeldenummer: **19733962.5**

(22) Anmeldetag: **06.06.2019**

(51) Internationale Patentklassifikation (IPC):
**H02M 1/32** *(2007.01)*     **H02M 7/483** *(2007.01)*

(52) Gemeinsame Patentklassifikation (CPC):
**H02M 7/483; H02M 1/32; H02M 7/4835; H02M 1/327**

(86) Internationale Anmeldenummer:
**PCT/EP2019/064860**

(87) Internationale Veröffentlichungsnummer:
**WO 2020/244768 (10.12.2020 Gazette 2020/50)**

(54) **UMRICHTER UND VERFAHREN ZU DESSEN BETRIEB**

INVERTER AND METHOD FOR ITS OPERATION

ONDULEUR ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.03.2022 Patentblatt 2022/09**

(73) Patentinhaber: **Siemens Energy Global GmbH & Co. KG**
**81739 München (DE)**

(72) Erfinder:
• **DELZENNE, Maxime**
**99089 Erfurt (DE)**
• **EBNER, Günter**
**91239 Henfenfeld (DE)**

(56) Entgegenhaltungen:
WO-A1-2018/230327     CN-A- 104 934 989
CN-A- 107 733 274     JP-A- 2018 196 237

• **BAKHSHIZADEH MOHAMMAD KAZEM ET AL: "Indirect thermal control for improved reliability of Modular Multilevel Converter by utilizing circulating current", 2015 IEEE APPLIED POWER ELECTRONICS CONFERENCE AND EXPOSITION (APEC), IEEE, 15. März 2015 (2015-03-15), Seiten 2167-2173, XP032775226, DOI: 10.1109/APEC.2015.7104649 [gefunden am 2015-05-08]**
• **ROCHA ANDERSON VAGNER ET AL: "Thermal Stress and High Temperature Effects on Power Devices in a Fault-Resilient NPC IGCT-Based Converter", IEEE TRANSACTIONS ON POWER ELECTRONICS, INSTITUTE OF ELECTRICAL AND ELECTRONICS ENGINEERS, USA, Bd. 31, Nr. 4, 1. April 2016 (2016-04-01), Seiten 2800-2807, XP011592307, ISSN: 0885-8993, DOI: 10.1109/TPEL.2015.2452262 [gefunden am 2015-11-26]**
• **GRINBERG R ET AL: "Study of overcurrent protection for modular multilevel converter", 2014 IEEE ENERGY CONVERSION CONGRESS AND EXPOSITION (ECCE), IEEE, 14. September 2014 (2014-09-14), Seiten 3401-3407, XP032680626, DOI: 10.1109/ECCE.2014.6953862 [gefunden am 2014-11-11]**

**Beschreibung**

Die Erfindung bezieht sich auf Umrichter und Verfahren zu deren Betrieb.

Die Veröffentlichungsschrift "Modular Multilevel Converter: An universal concept for HVDC-Networks and extended DC-Bus-Applications" (R. Marquardt, 2010 International Power Electronics Conference, Seiten 502 bis 507, 978-1-4244-5393-1/10, 2010 IEEE) offenbart einen elektrischen Umrichter in Form eines Multilevelumrichters, der eine zumindest zweiphasige Wechselspannungsseite mit zumindest zwei Wechselspannungsanschlüssen, eine Gleichspannungsseite und zumindest zwei parallel geschaltete Reihenschaltungen aufweist, wobei jede der Reihenschaltungen jeweils einen Umrichterarm des Umrichters bildet und einem der Wechselspannungsanschlüsse auf der Wechselspannungsseite des Umrichters zugeordnet ist.

Ein Multilevelumrichter mit anderer Art Teilmodulen ist aus der internationalen Veröffentlichungsschrift WO 2015/036149 A1 bekannt.

Aus der Schrift "Indirect Thermal Control for Improved Reliability of Modular Multilevel Converter by Utilizing Circulating Current" von M. K. Bakhshizadeh et al, 2015 IEEE Applied Power Electronics Conference and Exposition (APEC), IEEE, 15. März 2015, Seiten 2167-2173, XP032775226, ist ein Regelungsverfahren bekannt, das in einem Multilevelumrichter fließende Kreisströme berücksichtigt. Dabei wird die Amplitude der Temperaturzyklen begrenzt, was die Ausfallsicherheit des Multilevelumrichters verbessert.

In der Offenlegungsschrift CN 104 934 989 A wird ein Blindleistungskompensator in modularer Multilevel-Topologie offenbart, wobei ebenfalls der Einfluss von Kreisströmen berücksichtigt wird.

Der Erfindung liegt die Aufgabe zugrunde, ein Verfahren zum Betreiben eines Umrichters anzugeben, das eine thermische Überlastung bzw. Überhitzung des Umrichters auf einfache Weise vermeiden hilft.

Diese Aufgabe wird erfindungsgemäß durch ein Verfahren und einen Umrichter mit den Merkmalen gemäß Verfahrensanspruch 1 und Anordnungsanspruch 14 gelöst. Vorteilhafte Ausgestaltungen des erfindungsgemäßen Verfahrens sind in Unteransprüchen angegeben.

Danach ist erfindungsgemäß vorgesehen, dass ein die thermische Belastung des Umrichters beschreibender Belastungswert in Abhängigkeit von zumindest drei Stromwerten errechnet wird, nämlich einem Wirkleistungsstromwert, der den Wirkleistungsstromanteil eines über einen der Wechselspannungsanschlüsse fließenden Phasenstroms angibt, einem Blindleistungsstromwert, der den Blindleistungsstromanteil des über den zuvor genannten Wechselspannungsanschluss fließenden Phasenstroms angibt, und einem Kreisstromwert, der die Größe des oder der zwischen den Reihenschaltungen fließenden Kreisströme angibt, und die Steuerung des Umrichters zumindest auch unter Berücksichtigung dieses Belastungswerts erfolgt.

Ein wesentlicher Vorteil des erfindungsgemäßen Verfahrens beruht auf der Ermittlung des Belastungswerts, die auf der Basis der erfindungsgemäß herangezogenen Größen bzw. Messwerte in sehr einfacher Weise, schnell und mit geringem Rechenaufwand durchführbar ist, aber dennoch sehr verlässliche Aussagen über die tatsächliche thermische Belastung des Umrichters liefert. Unter Heranziehung des Belastungswerts ist eine Steuerung des Umrichters mit Blick auf thermische Aspekte sehr effizient möglich.

Der Kreisstromwert wird vorzugsweise ermittelt, indem für jede der Reihenschaltungen jeweils der dort fließende, also reihenschaltungsbezogene Kreisstrom ermittelt wird, der betragsmäßig größte reihenschaltungsbezogene Kreisstrom bestimmt wird und der Betrag oder die Amplitude dieses größten reihenschaltungsbezogenen Kreisstroms als der Kreisstromwert angesehen wird.

Die reihenschaltungsbezogenen Kreisströme werden bevorzugt berechnet gemäß

$$Iki(t) = (Ipi(t)+Iqi(t))/2 + Idc(t)/n - Iai(t)$$

wobei Iki(t) den von der Zeit t abhängigen reihenschaltungsbezogenen Kreisstrom in der i-ten Reihenschaltung bzw. dem i-ten Umrichterarm bezeichnet, Ipi(t) den von der Zeit t abhängigen Wirkleistungsstrom, der über den an die i-te Reihenschaltung bzw. an den i-ten Umrichterarm angeschlossenen Wechselspannungsanschluss fließt, bezeichnet, Iqi(t) den von der Zeit t abhängigen Blindleistungsstrom, der über den an die i-te Reihenschaltung bzw. an den i-ten Umrichterarm angeschlossenen Wechselspannungsanschluss fließt, bezeichnet, Idc(t) den von der Zeit t abhängigen und auf der Gleichspannungsseite fließenden Gleichstrom bezeichnet, Iai(t) den von der Zeit t abhängigen Armstrom bezeichnet, der zwischen dem positiven Gleichspannungsanschluss der Gleichspannungsseite und dem an den i-ten Umrichterarm angeschlossenen Wechselspannungsanschluss fließt, und n die Anzahl der Reihenschaltungen bzw. Umrichterarme bezeichnet.

Wird der von der Zeit t abhängige Armstrom Iai(t) zwischen dem an den i-ten Umrichterarm angeschlossenen Wechselspannungsanschluss und dem negativen Gleichspannungsanschluss der Gleichspannungsseite gemessen, so werden die reihenschaltungsbezogenen Kreisströme vorzugsweise berechnet gemäß

$$\text{Iki(t)} = -(\text{Ipi(t)}+\text{Iqi(t)})/2 + \text{Idc(t)}/n - \text{Iai(t)}$$

Die Steuerung des Umrichters erfolgt bevorzugt derart, dass der Belastungswert einen vorgegebenen Belastungsgrenzwert unterschreitet oder zumindest nicht überschreitet.

Erfindungsgemäß wird der sich zeitlich ändernde Belastungswert ermittelt gemäß

$$Ith = \sqrt{\frac{1}{a} \cdot (Ip^2 + Iq^2) + (k1 \cdot Ip \cdot f(\frac{Vconv}{Vdc}) + k2 \cdot Ik)}$$

wobei Ip den oben genannten Wirkleistungsstromwert bezeichnet und durch den Betrag oder die Amplitude des Wirkleistungsstromanteils des über einen der Wechselspannungsanschlüsse fließenden Phasenstroms gebildet wird, Iq den oben genannten Blindleistungsstromwert bezeichnet und durch den Betrag oder die Amplitude des Blindleistungsstromanteils des über den Wechselspannungsanschluss fließenden Phasenstroms gebildet wird, Vconv den Betrag oder die Amplitude der Spannung an dem Wechselspannungsanschluss bezeichnet, Vdc den Betrag oder die Amplitude der Gleichspannung auf der Gleichspannungsseite bezeichnet, $f(\frac{Vconv}{Vdc})$ eine vorgegebene Funktion eines Quotienten aus dem Betrag oder der Amplitude der Spannung an dem Wechselspannungsanschluss und der Gleichspannung auf der Gleichspannungsseite bezeichnet, Ik den Kreisstromwert bezeichnet und durch den Betrag oder die Amplitude des größten reihenschaltungsbezogenen Kreisstroms gebildet wird und a, k1 und k2 vorgegebene Konstanten sind.

Der Belastungsgrenzwert kann in vorteilhafter Weise ermittelt werden unter Heranziehung eines den Belastungswert betreffenden Integrals, insbesondere gemäß

$$Ith\max = f(\int Ith(t)^2 dt)$$

wobei Ith(t) den Belastungswert über der Zeit t und f eine vorgegebene Funktion des über das Quadrat des Belastungswerts gebildeten Integrals bezeichnet.

Auch ist es von Vorteil, wenn der Belastungsgrenzwert reduziert wird, wenn die Temperatur des Umrichters eine vorgegebene Maximaltemperatur erreicht oder überschreitet.

Bei einer ersten als besonders vorteilhaft angesehenen Verfahrensvariante ist vorgesehen, dass die Steuerung des Umrichters im Falle, dass der Belastungswert den vorgegebenen Belastungsgrenzwert erreicht oder überschreitet, zunächst die gezielte Reduktion des Wirkleistungsstroms einschließt.

Bei der ersten Verfahrensvariante ist es besonders vorteilhaft, wenn die Steuerung des Umrichters im Falle, dass der Belastungswert den vorgegebenen Belastungsgrenzwert erreicht oder überschreitet, so oder zunächst so erfolgt, dass der Wirkleistungsstromwert einen vorgegebenen Wirkleistungsmaximalstromwert nicht überschreitet, wobei der Wirkleistungsmaximalstromwert anhand folgender Bedingungsgleichung ermittelt wird:

$$Ith\max = \sqrt{\frac{1}{a} \cdot (Ip\max^2 + Iq^2) + (k1 \cdot Ip\max \cdot f(\frac{Vconv}{Vdc}) + k2 \cdot Ik)}$$

wobei Ithmax den vorgegebenen Belastungsgrenzwert und Ipmax den Wirkleistungsmaximalstromwert bezeichnet.

Alternativ oder zusätzlich kann der Wirkleistungsmaximalstromwert ermittelt werden gemäß

$$Ip\max = \sqrt{\frac{2Ith\max^2 - Iq^2}{1 + 2(k1 \cdot Vconv/Vdc)^2} - \frac{2 \cdot k1 \cdot k2 \cdot |Ik| \cdot (Vconv/Vdc)}{1 + 2(k1 \cdot Vconc/Vdc)^2}}$$

wobei Ithmax den vorgegebenen Belastungsgrenzwert und Ipmax den Wirkleistungsmaximalstromwert bezeichnet.

Falls im Rahmen der Steuerung Ith den vorgegebenen Belastungsgrenzwert Ithmax noch erreicht oder überschreitet, obwohl der Wirkleistungsmaximalstromwert Ipmax und damit der Wirkleistungsstromwert Ip bereits auf Null abgesenkt worden sind bzw. Null erreicht haben, so wird vorzugsweise nachfolgend der Blindleistungsmaximalstromwert Iqmax und damit der Blindleistungsstromwert Iq reduziert gemäß

$$Iq\max = \sqrt{2 \cdot Ith\max^2 - 2 \cdot (k2 \cdot Ik)^2}$$

Bei einer zweiten als besonders vorteilhaft angesehenen Verfahrensvariante ist vorgesehen, dass die Steuerung des Umrichters im Falle, dass der Belastungswert den vorgegebenen Belastungsgrenzwert erreicht oder überschreitet, zunächst die gezielte Reduktion des Blindleistungsstroms einschließt.

Bei der zweiten Verfahrensvariante ist es besonders vorteilhaft, wenn die Steuerung des Umrichters derart oder zunächst derart erfolgt, dass der Blindleistungsstromwert einen vom Belastungswert abhängigen Blindleistungsmaximalstromwert unterschreitet oder zumindest nicht überschreitet, wobei der Blindleistungsmaximalstromwert anhand folgender Bedingungsgleichung ermittelt wird:

$$Ith\max = \sqrt{\frac{1}{a} \cdot (Ip^2 + Iq\max^2) + (k1 \cdot Ip \cdot f(\frac{Vconv}{Vdc}) + k2 \cdot Ik)}$$

wobei Ithmax den vorgegebenen Belastungsgrenzwert und Iqmax den Blindleistungsmaximalstromwert bezeichnet.

Alternativ oder zusätzlich kann der Blindleistungsmaximalstromwert ermittelt werden gemäß

$$Iq\max = \sqrt{2 \cdot Ith\max^2 - Ip^2 - 2 \cdot (k1 \cdot Ip \cdot \frac{Vconv}{Vdc} + k2 \cdot Ik)^2}$$

wobei Ithmax den vorgegebenen Belastungsgrenzwert und Iqmax den Blindleistungsmaximalstromwert bezeichnet.

Falls im Rahmen der Steuerung Ith den vorgegebenen Belastungsgrenzwert Ithmax noch erreicht oder überschreitet, obwohl der Blindleistungsmaximalstromwert Iqmax und damit der Blindleistungsstromwert Iq bereits auf Null abgesenkt worden sind bzw. Null erreicht haben, so wird vorzugsweise nachfolgend der Wirkleistungsmaximalstromwert Ipmax und damit der Wirkleistungsstromwert Ip reduziert gemäß

$$Ip\max = \sqrt{\frac{2 Ith\max^2}{1 + 2(k1 \cdot Vconv/Vdc)^2} - \frac{2 \cdot k1 \cdot k2 \cdot |Ik| \cdot (Vconv/Vdc)}{1 + 2(k1 \cdot Vconc/Vdc)^2}}$$

Die Erfindung bezieht sich außerdem auf einen elektrischen Umrichter, der eine zumindest zweiphasige Wechselspannungsseite mit zumindest zwei Wechselspannungsanschlüssen, eine Gleichspannungsseite und zumindest zwei parallel geschaltete Reihenschaltungen aufweist, wobei jede der Reihenschaltungen jeweils einen Umrichterarm des Umrichters bildet und einem der Wechselspannungsanschlüsse auf der Wechselspannungsseite des Umrichters zugeordnet ist und wobei zwischen den zumindest zwei parallel geschalteten Reihenschaltungen ein oder mehrere Kreisströme fließen können. Ein solcher Umrichter ist aus der oben genannten Veröffentlichungsschrift "Modular Multilevel Converter: An universal concept for HVDC-Networks and extended DC-Bus-Applications" (R. Marquardt, 2010 International Power Electronics Conference, Seiten 502 bis 507, 978-1-4244-5393-1/10, 2010 IEEE) bekannt.

Erfindungsgemäß weist der Umrichter die Merkmale des unabhängigen Anordnungsanspruchs auf. Unter anderem ist vorgesehen, dass der Umrichter eine Steuereinrichtung aufweist, die einen die thermische Belastung des Umrichters beschreibenden Belastungswert in Abhängigkeit von zumindest drei Stromwerten errechnet, nämlich einem Wirkleistungsstromwert, der den Wirkleistungsstromanteil eines über einen der Wechselspannungsanschlüsse fließenden Phasenstroms angibt, einem Blindleistungsstromwert, der den Blindleistungsstromanteil des über den zuvor genannten Wechselspannungsanschluss fließenden Phasenstroms angibt, und einem Kreisstromwert, der die Größe des oder der zwischen den Reihenschaltungen fließenden Kreisströme angibt, und die Steuereinrichtung die Steuerung des Umrichters zumindest auch unter Berücksichtigung dieses Belastungswerts durchführt.

Bezüglich der Vorteile des erfindungsgemäßen Umrichters und bezüglich vorteilhafter Ausgestaltungen des erfindungsgemäßen Umrichters sei auf die obigen Erläuterungen im Zusammenhang mit dem erfindungsgemäßen Verfahren verwiesen.

Die Erfindung wird nachfolgend anhand von Ausführungsbeispielen näher erläutert; dabei zeigen beispielhaft:

Figur 1    ein Ausführungsbeispiel für einen erfindungsgemäßen Umrichter,

Figur 2    ein erstes Ausführungsbeispiel für ein für den Umrichter gemäß Figur 1 geeignetes Teilmodul,

Figur 3    ein zweites Ausführungsbeispiel für ein für den Umrichter gemäß Figur 1 geeignetes Teilmodul und

Figur 4    ein Blockschaltbild einer beispielhaften Anordnung von Komponenten, mit denen sich der Belastungswert Ith errechnen lässt.

In den Figuren werden der Übersicht halber für identische oder vergleichbare Komponenten stets dieselben Bezugszeichen verwendet.

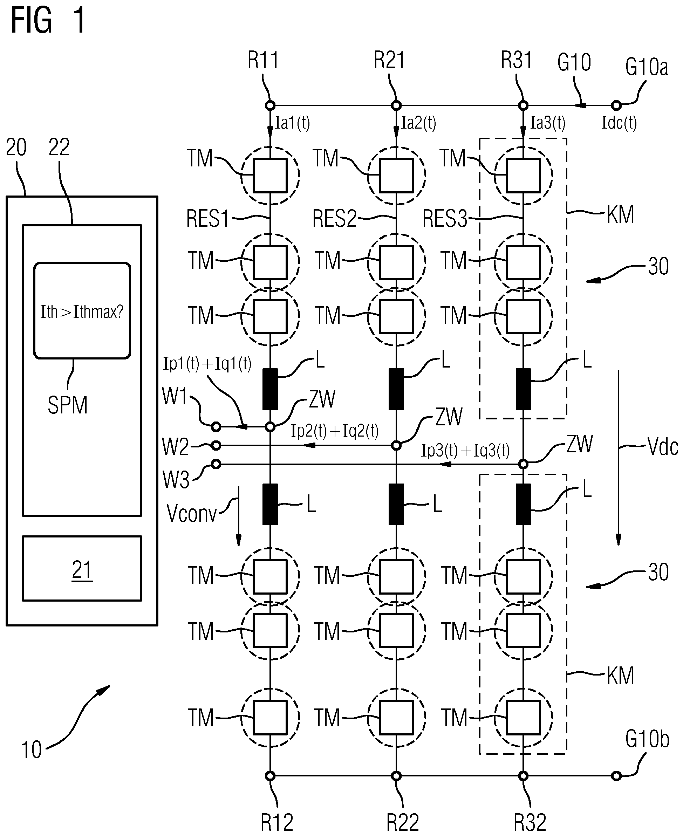

Die Figur 1 zeigt ein Ausführungsbeispiel für einen dreiphasigen modularen Umrichter 10, dessen Arbeitsweise von einer Steuereinrichtung 20 festgelegt wird.

Bei dem Umrichter 10 kann es sich um einen beliebigen Umrichter handeln, beispielsweise einen Multilevelumrichter, unabhängig von dessen Einsatz; es kann sich also beispielsweise um einen Umrichter auf dem Gebiet der Hochspannungsgleichstromtechnik (HVDC), dem Gebiet der Windanlagen oder dem Gebiet der Eisenbahntechnik handeln.

Der Umrichter 10 umfasst Wechselspannungsanschlüsse W1, W2 und W3 zum Einspeisen oder zur Entnahme von Wechselstrom in Form von Phasenströmen, die jeweils einen Wirkleistungsstrom Ip1(t), Ip2(t) und Ip3(t) sowie einen Blindleistungsstrom Iq1(t), Iq2(t) und Iq3(t) umfassen oder umfassen können.

Darüber hinaus ist der Umrichter 10 mit einer Gleichspannungsseite G10 ausgestattet, die zwei Gleichspannungsanschlüsse G10a und G10b umfasst, über die Gleichstrom Idc eingespeist oder entnommen werden kann.

Der Umrichter 10 gemäß Figur 1 weist drei parallel geschaltete Reihenschaltungen RES1, RES2 und RES3 auf, deren äußere Anschlüsse R11, R21 und R31 mit dem Gleichspannungsanschluss G10a in Verbindung stehen. Die äußeren Anschlüsse R12, R22 und R32 stehen mit dem Gleichspannungsanschluss G10b der Gleichspannungsseite G10 in Verbindung. Mit anderen Worten bilden also die äußeren Anschlüsse der drei Reihenschaltungen RES1, RES2 und RES3 die Gleichspannungsseite G10 des Umrichters 10.

Bei dem Ausführungsbeispiel gemäß Figur 1 ist jede der drei Reihenschaltungen RES1, RES2 und RES3 jeweils durch zwei Konvertermodule KM gebildet, die jeweils aus drei oder mehr in Reihe geschalteten Teilmodulen TM und einer Induktivität L bestehen. Jeweils zwischen zwei Konvertermodulen KM - hier jeweils zwischen zwei Induktivitäten L - befindet sich ein Zwischenanschluss ZW, der potentialmäßig zwischen den in der Figur 1 oberen drei Teilmodulen und den in Figur 1 unteren drei Teilmodulen liegt und einen der drei Wechselspannungsanschlüsse W1, W2 und W3 des Umrichters 10 bildet. Die Teilmodule TM werden von der Steuereinrichtung 20 angesteuert.

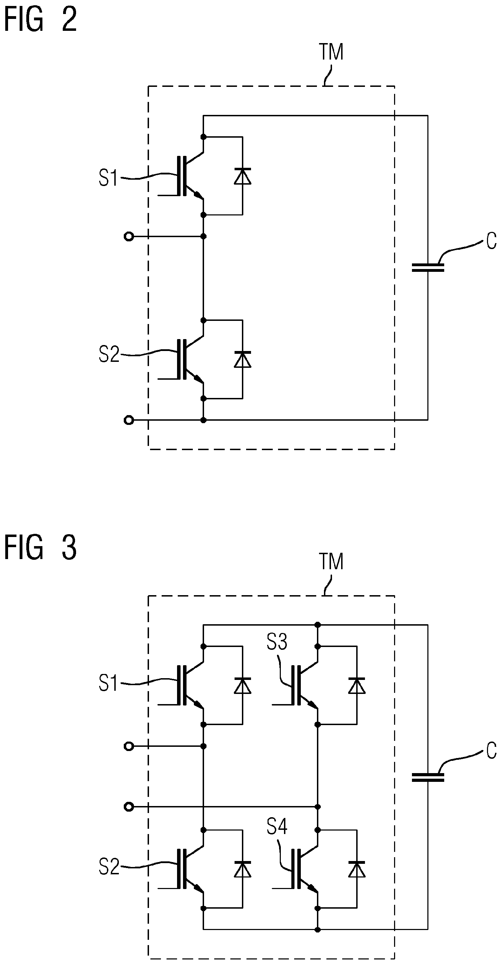

Die Teilmodule TM können Halbbrückenmodule wie in Figur 2 gezeigt oder Vollbrückenmodule wie in Figur 3 gezeigt sein.

Die Figur 2 zeigt ein Ausführungsbeispiel für ein Halbbrückenmodul, das als eines der Teilmodule TM gemäß Figur 1 eingesetzt werden kann. Das Teilmodul TM umfasst zwei Schalter S1 und S2, die jeweils durch einen Transistor und eine parallel geschaltete Freilaufdiode gebildet sind, und einen Kondensator C.

Die Figur 3 zeigt ein Ausführungsbeispiel für ein Vollbrückenmodul, das als eines der Teilmodule TM gemäß Figur 1 eingesetzt werden kann. Das Teilmodul TM umfasst vier Schalter S1 bis S4, die jeweils durch einen Transistor und eine parallel geschaltete Freilaufdiode gebildet sind, und einen Kondensator C.

Die Steuereinrichtung 20 gemäß Figur 1 ist bemüht, eine thermische Überlastung des Umrichters 10 zu vermeiden. Zu diesem Zwecke bildet die Steuereinrichtung 20 einen die thermische Belastung des Umrichters 10 beschreibenden Belastungswert Ith, den sie in Abhängigkeit von zumindest drei Stromwerten errechnet.

Nachfolgend wird im Rahmen von Ausführungsbeispielen erläutert, wie der Belastungswert Ith ermittelt und weiter verwendet werden kann. Dabei wird beispielhaft von einem dreiphasigen Umrichter 10, wie in der Figur 1 gezeigt, ausgegangen; die nachfolgenden Erläuterungen gelten für zwei oder mehr dreiphasige Umrichter 10 entsprechend.

Die Steuereinrichtung 20 des Umrichters 10 umfasst für die Ausführung der nachfolgend beschriebenen Verfahrensschritte, insbesondere Rechenschritte, eine Recheneinrichtung 21 und einen Speicher 22. In dem Speicher 22 ist ein Steuerprogrammmodul SPM abgespeichert, das bei Ausführung durch die Recheneinrichtung 21 die Abarbeitung der nachfolgend im Detail beschriebenen Verfahrens- und Rechenschritte veranlasst; die Messwerte, auf deren Basis die Verfahrens- und Rechenschritte ausgeführt werden, stammen von Sensoren, die aus Gründen der Übersicht nicht weiter gezeigt sind und mit der Steuereinrichtung 20 in Verbindung stehen.

Zunächst ermittelt die Steuereinrichtung 20 die reihenschaltungsbezogenen Kreisströme, die im Umrichter 10 fließen, beispielsweise gemäß

$$Ik1(t) = (Ip1(t)+Iq1(t))/2 + Idc(t)/3 - Ia1(t)$$

$$Ik2(t) = (Ip2(t)+Iq2(t))/2 + Idc(t)/3 - Ia2(t)$$

```
Ik3(t) = (Ip3(t)+Iq3(t))/2 + Idc(t)/3 - Ia3(t)
```

wobei Ik1(t) den von der Zeit t abhängigen reihenschaltungsbezogenen Kreisstrom in der ersten Reihenschaltung RES1, Ik2(t) den von der Zeit t abhängigen reihenschaltungsbezogenen Kreisstrom in der zweiten Reihenschaltung RES2 und Ik3(t) den von der Zeit t abhängigen reihenschaltungsbezogenen Kreisstrom in der dritten Reihenschaltung RES3 bezeichnet. Ip1(t), Ip2(t) und Ip3(t) bezeichnen die von der Zeit t abhängigen Wirkleistungsströme, die über die Wechselspannungsanschlüsse W1, W2 und W3 fließen. Iq1(t), Iq2(t) und Iq3(t) bezeichnen die von der Zeit t abhängigen Blindleistungsströme, die über die Wechselspannungsanschlüsse W1, W2 und W3 fließen. Idc(t) bezeichnet den von der Zeit t abhängigen und auf der Gleichspannungsseite G10 fließenden Gleichstrom. Ia1(t), Ia2(t) und Ia3(t) bezeichnen die von der Zeit t abhängigen Armströme, die zwischen dem positiven Gleichspannungsanschluss G10a der Gleichspannungsseite G10 und den Wechselspannungsanschlüssen W1, W2 und W3 fließen.

Werden die Armströme jeweils zwischen den Wechselspannungsanschlüssen W1, W2 bzw. W3 und dem negativen Gleichspannungsanschluss G10b der Gleichspannungsseite gemessen, so werden die reihenschaltungsbezogenen Kreisströme vorzugsweise wie folgt berechnet:

```
Ik1(t) = -(Ip1(t)+Iq1(t))/2 + Idc(t)/3 - Ia1(t)
```

```
Ik2(t) = -(Ip2(t)+Iq2(t))/2 + Idc(t)/3 - Ia2(t)
```

```
Ik3(t) = -(Ip3(t)+Iq3(t))/2 + Idc(t)/3 - Ia3(t)
```

Von den reihenschaltungsbezogenen Kreisströmen Ik1(t), Ik2(t) und Ik3(t) wählt die Steuereinrichtung 20 den betragsmäßig größten reihenschaltungsbezogenen Kreisstrom aus und sieht den Betrag oder die Amplitude dieses größten reihenschaltungsbezogenen Kreisstroms nachfolgend als sogenannten Kreisstromwert Ik für die weitere Steuerung an.

Auf der Basis des Kreisstromwerts Ik ermittelt die Steuereinrichtung 20 nachfolgend den Belastungswert Ith vorzugsweise gemäß

$$Ith = \sqrt{\frac{1}{a} \cdot (Ip^2 + Iq^2) + (k1 \cdot Ip \cdot f(\frac{Vconv}{Vdc}) + k2 \cdot Ik)}$$

wobei Ip einen Wirkleistungsstromwert bezeichnet, der durch den Betrag oder die Amplitude eines der Wirkleistungsströme Ip1(t), Ip2(t) oder Ip3(t) gebildet wird. In der Regel werden die Phasenströme, die über die Wechselspannungsanschlüsse W1, W2 und W3 fließen, betrags- und amplitudenmäßig gleich oder sehr ähnlich sein, so dass jeder der Phasenströme in den Wechselspannungsanschlüssen W1, W2 oder W3 zur Bildung des Wirkleistungsstromwerts Ip ausgewählt werden kann, beispielsweise der Phasenstrom über den Wechselspannungsanschluss W1.

Unterscheiden sich die Phasenströme an den Wechselspannungsanschlüssen W1, W2 oder W3 über ein vorgegebenes Maß hinaus, so können die Beträge oder Amplituden der Wirkleistungsströme Ip1(t), Ip2(t) und Ip3(t) auch gemittelt werden und der Mittelwert als der Wirkleistungsstromwert Ip weiter verwendet werden.

Iq bezeichnet in der obigen Formel einen Blindleistungsstromwert, der durch den Betrag oder die Amplitude des Blindleistungsstromanteils desjenigen Phasenstroms gebildet wird, der auch für die Bestimmung des Wirkleistungsstromwerts herangezogen wurde. Wurde der Wirkleistungsstromwert durch Mittelung der Beträge oder Amplituden der Wirkleistungsstromanteile Ip1(t), Ip2(t) und Ip3(t) gebildet, so wird der Blindleistungsstromwert vorzugsweise ebenfalls durch Mittelung gebildet, nämlich durch Mittelung der Beträge oder Amplituden der Blindleistungsstromanteile Iq1(t), Iq2(t) und Iq3(t).

Vconv bezeichnet in der zuletzt genannten Formel den Betrag oder die Amplitude der Spannung an dem ausgewählten Wechselspannungsanschluss W1, W2 oder W3 oder einen daraus gebildeten Mittelwert; Vdc bezeichnet den Betrag oder die Amplitude der Gleichspannung auf der Gleichspannungsseite G10. $f(\frac{Vconv}{Vdc})$ bezeichnet in der zuletzt genannten Formel eine vorgegebene Funktion eines Quotienten aus dem Betrag oder der Amplitude der Spannung an dem Wechselspannungsanschluss W1, W2 bzw. W3 und der Gleichspannung Udc auf der Gleichspannungsseite G30.

Ik bezeichnet in der zuletzt genannten Formel den Kreisstromwert, der durch den Betrag oder die Amplitude des größten reihenschaltungsbezogenen Kreisstroms gebildet wird, wie oben bereits erläutert.

Die Formelzeichen a, k1 und k2 sind vorgegebene Konstanten. Die Konstante a ist vorzugsweise gleich 2.

Die Konstanten k1 und k2 werden vorzugsweise anhand von Testmessungen ermittelt, bei denen der Belastungswert Ith mit der tatsächlichen thermischen Belastung des Umrichters 10 (z. B. anhand von Temperaturmessungen) verglichen wird und deren Vergleichsergebnisse für den späteren Umrichterbetrieb geeignete Werte für die Konstanten k1 und k2 liefern.

Die Funktion $f(\frac{Vconv}{Vdc})$ lautet vorzugsweise:

$$f(\frac{Vconv}{Vdc}) = \frac{Vconv}{Vdc}$$

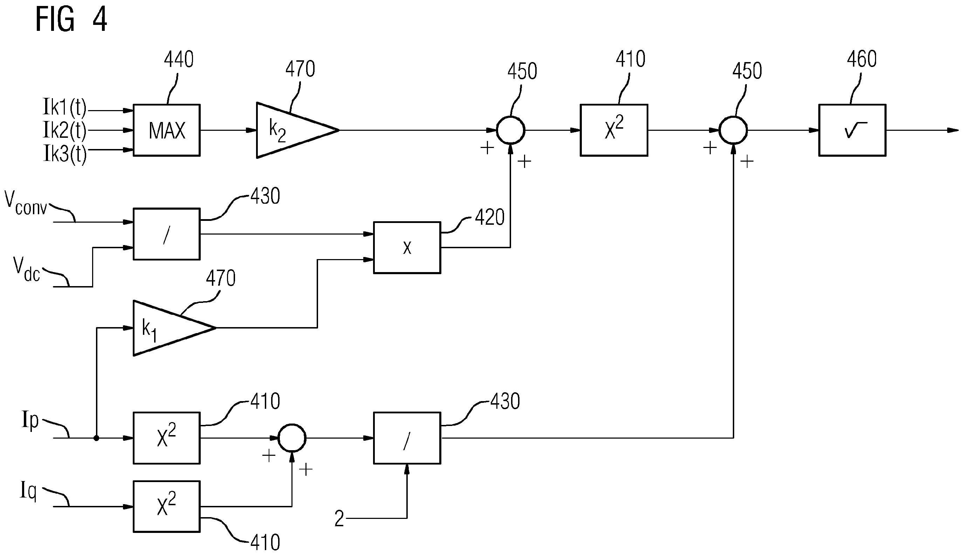

Die Figur 4 zeigt ein Blockschaltbild einer Anordnung 400 von Komponenten, mit denen sich der Belastungswert Ith wie beschrieben errechnen lässt. Die Anordnung 400 umfasst drei Quadrierer 410, einen Multiplizierer 420, zwei Dividierer 430, einen Maximalwertbildner 440, zwei Addierer 450, einen Wurzelbildner 460 und zwei Skalierer 470 (Multiplizierer mit einer Konstanten k1 bzw. k2).

Erreicht oder überschreitet der Belastungswert Ith einen vorgegebenen Belastungsgrenzwert Ithmax, so kann bei bevorzugten Steuer- bzw. Regelvarianten eine gezielte Reduktion des Wirkleistungsstroms oder des Blindleistungsstroms erfolgen.

Soll im Falle, dass der Belastungswert Ith den vorgegebenen Belastungsgrenzwert Ithmax erreicht oder überschreitet, zunächst eine gezielte Reduktion des Wirkleistungsstroms erfolgen, so wird die Steuereinrichtung 20 vorzugsweise durch geeignete Ansteuerung der Teilmodule TM dafür sorgen, dass der Wirkleistungsstromwert Ip einen vorgegebenen Wirkleistungsmaximalstromwert Ipmax nicht überschreitet. Dieser Wirkleistungsmaximalstromwert Ipmax wird vorzugsweise numerisch anhand folgender Bedingungsgleichung ermittelt:

$$Ith\max = \sqrt{\frac{1}{a} \cdot (Ip\max^2 + Iq^2) + (k1 \cdot Ip\max \cdot f(\frac{Vconv}{Vdc}) + k2 \cdot Ik)}$$

Alternativ kann die Steuereinrichtung 20 den Wirkleistungsmaximalstromwert durch Ausrechnen folgender Gleichung bestimmen:

$$Ip\max = \sqrt{\frac{2Ith\max^2 - Iq^2}{1 + 2(k1 \cdot Vconv/Vdc)^2} - \frac{2 \cdot k1 \cdot k2 \cdot |Ik| \cdot (Vconv/Vdc)}{1 + 2(k1 \cdot Vconc/Vdc)^2}}$$

Falls im Rahmen der Steuerung Ith den vorgegebenen Belastungsgrenzwert Ithmax noch erreicht oder überschreitet, obwohl der Wirkleistungsmaximalstromwert Ipmax und damit der Wirkleistungsstromwert Ip bereits auf Null abgesenkt worden sind und Null erreicht haben, so wird vorzugsweise nachfolgend der Blindleistungsmaximalstromwert Iqmax und damit der Blindleistungsstromwert Iq reduziert gemäß

$$Iq\max = \sqrt{2 \cdot Ith\max^2 - 2 \cdot (k2 \cdot Ik)^2}$$

Soll im Falle, dass der Belastungswert Ith den vorgegebenen Belastungsgrenzwert Ithmax erreicht oder überschreitet, zunächst eine gezielte Reduktion des Blindleistungsstroms erfolgen, so wird die Steuereinrichtung 20 vorzugsweise durch geeignete Ansteuerung der Teilmodule TM dafür sorgen, dass der Blindleistungsstromwert Iq einen vom Belastungsgrenzwert Ithmax abhängigen Blindleistungsmaximalstromwert Iqmax unterschreitet oder zumindest nicht überschreitet. Dieser Blindleistungsmaximalstromwert Iqmax wird vorzugsweise anhand folgender Bedingungsgleichung ermittelt:

$$Ith\max = \sqrt{\frac{1}{a} \cdot (Ip^2 + Iq\max^2) + (k1 \cdot Ip \cdot f(\frac{Vconv}{Vdc}) + k2 \cdot Ik)}$$

Alternativ kann die Steuereinrichtung 20 den Blindleistungsmaximalstromwert Iqmax durch Ausrechnen folgender Gleichung bestimmen:

$$Iq\max = \sqrt{2 \cdot Ith\max^2 - Ip^2 - 2 \cdot (k1 \cdot Ip \cdot \frac{Vconv}{Vdc} + k2 \cdot Ik)^2}$$

Falls im Rahmen der Steuerung Ith den vorgegebenen Belastungsgrenzwert Ithmax noch erreicht oder überschreitet, obwohl der Blindleistungsmaximalstromwert Iqmax und damit der Blindleistungsstromwert Iq bereits auf Null abgesenkt worden sind und Null erreicht haben, so wird vorzugsweise nachfolgend der Wirkleistungsmaximalstromwert Ipmax und damit der Wirkleistungsstromwert Ip reduziert gemäß

$$Ip\max = \sqrt{\frac{2Ith\max^2}{1 + 2(k1 \cdot Vconv/Vdc)^2} - \frac{2 \cdot k1 \cdot k2 \cdot |Ik| \cdot (Vconv/Vdc)}{1 + 2(k1 \cdot Vconc/Vdc)^2}}$$

Der oben genannte Belastungsgrenzwert Ithmax wird vorzugsweise unter Heranziehung des sich zeitlich ändernden Belastungswerts Ith ermittelt bzw. an diesen angepasst, und zwar besonders bevorzugt durch eine Funktion in Abhängigkeit eines Integrals. Ithmax wird vorzugsweise errechnet gemäß:

$$Ith\max = f(\int Ith(t)^2 \, dt) \, ,$$

insbesondere gemäß

$$Ith\max(t) = f(\int_{t-T}^{t} Ith(t)^2 \, dt)$$

wobei Ith(t) den Belastungswert über der Zeit t und f eine vorgegebene Funktion des über das Quadrat des Belastungswerts gebildeten Integrals bezeichnet. Die Integrationsdauer T kann ein fester Wert sein, der vorzugsweise von der Periodendauer bzw. der Frequenz auf der Wechselspannungsseite des Umrichters 10 abhängt.
Die Funktion f lautet vorzugsweise wie folgt:

$$f(x) = I_1 + (I_2 - I_1) \cdot \max\left(0, \min\left(1, 1 - \frac{1}{K} \cdot (x - I_1^2 T)\right)\right)$$

wobei I1, I2 und k vorgegebene Konstanten sind. I1 beschreibt die maximale Belastung, die dauerhaft zulässig für den Umrichter ist; I2 beschreibt die maximale Belastung, die kurzzeitig zulässig für den Umrichter ist. k ist homogen (proportional) zu i$^2$t und entspricht der maximalen Belastung I2 während einer vordefinierten Zeitspanne (z. B. der Integrationsdauer T) .
Bei einer vereinfachten Variante wird der Belastungsgrenzwert Ithmax errechnet gemäß

$$Ith\max(t) = f(\int_{t-T}^{t} Ith(t)^2 \, dt) = \int_{t-T}^{t} Ith(t)^2 \, dt$$

Auch ist es von Vorteil, wenn der Belastungsgrenzwert Ithmax reduziert wird, wenn die Temperatur des Umrichters 10 eine vorgegebene Maximaltemperatur Tmax erreicht oder überschreitet.
Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung gemäß folgender Patentansprüche zu verlassen.

Bezugszeichenliste

| | |
|---|---|
| 10 | Umrichter |
| 20 | Steuereinrichtung |
| 21 | Recheneinrichtung |
| 22 | Speicher |
| 400 | Anordnung |
| 410 | Quadrierer |
| 420 | Multiplizierer |
| 430 | Dividierer |
| 440 | Maximalwertbildner |
| 450 | Addierer |
| 460 | Wurzelbildner |
| 470 | Skalierer |

| | |
|---|---|
| a | Konstante |
| C | Kondensator |
| G10 | Gleichspannungsseite |
| G10a | Gleichspannungsanschluss |
| G10b | Gleichspannungsanschluss |
| Ia1 | Armstrom |
| Ia2 | Armstrom |
| Ia3 | Armstrom |
| Idc | Gleichstrom |
| Ik | Kreisstromwert |
| Ik1 | Kreisstrom |
| Ik2 | Kreisstrom |
| Ik3 | Kreisstrom |
| Ip | Wirkleistungsstromwert |
| Ip1(t) | Wirkleistungsstrom |
| Ip2(t) | Wirkleistungsstrom |
| Ip3(t) | Wirkleistungsstrom |
| Ipmax | Wirkleistungsmaximalstromwert |
| Iq1(t) | Blindleistungsstrom |
| Iq2(t) | Blindleistungsstrom |
| Iq3(t) | Blindleistungsstrom |
| Iqmax | Blindleistungsmaximalstromwert |
| Ith | Belastungswert |
| Ithmax | Belastungsgrenzwert |
| k1 | Konstante |
| k2 | Konstante |
| KM | Konvertermodul |
| L | Induktivität |
| R11 | Anschluss |
| R12 | Anschluss |
| R21 | Anschluss |
| R22 | Anschluss |
| R31 | Anschluss |
| R32 | Anschluss |
| RES1 | Reihenschaltung |
| RES2 | Reihenschaltung |
| RES3 | Reihenschaltung |
| S1 | Schalter |
| S2 | Schalter |
| S3 | Schalter |
| S4 | Schalter |

| SPM | Steuerprogrammmodul |
|---|---|
| t | Zeit |
| TM | Teilmodul |
| Udc | Gleichspannung |
| Vconv | Betrag oder Amplitude der der Spannung am Wechselspannungsanschluss |
| Vdc | Betrag oder Amplitude der Gleichspannung |
| W1 | Wechselspannungsanschluss |
| W2 | Wechselspannungsanschluss |
| W3 | Wechselspannungsanschluss |
| ZW | Zwischenanschluss |

**Patentansprüche**

1. Verfahren zum Betreiben eines elektrischen Umrichters (10), der eine zumindest zweiphasige Wechselspannungsseite mit zumindest zwei Wechselspannungsanschlüssen (W1, W2, W3), eine Gleichspannungsseite (G10) und zumindest zwei parallel geschaltete Reihenschaltungen (RES1, RES2, RES3) aufweist,

- wobei jede der Reihenschaltungen (RES1, RES2, RES3) jeweils einen Umrichterarm des Umrichters (10) bildet und einem der Wechselspannungsanschlüsse (W1, W2, W3) auf der Wechselspannungsseite des Umrichters (10) zugeordnet ist und
- wobei zwischen den zumindest zwei parallel geschalteten Reihenschaltungen (RES1, RES2, RES3) ein oder mehrere Kreisströme fließen können, wobei
- ein die thermische Belastung des Umrichters (10) beschreibender Belastungswert in Abhängigkeit von zumindest drei Stromwerten errechnet wird, nämlich
- einem Wirkleistungsstromwert, der den Wirkleistungsstromanteil eines über einen der Wechselspannungsanschlüsse (W1, W2, W3) fließenden Phasenstroms angibt,
- einem Blindleistungsstromwert, der den Blindleistungsstromanteil des über den zuvor genannten Wechselspannungsanschluss (W1, W2, W3) fließenden Phasenstroms angibt, und
- einem Kreisstromwert, der die Größe des oder der zwischen den Reihenschaltungen (RES1, RES2, RES3) fließenden Kreisströme angibt, und
- die Steuerung des Umrichters (10) zumindest auch unter Berücksichtigung dieses Belastungswerts erfolgt,

**dadurch gekennzeichnet, dass**
der sich zeitlich ändernde Belastungswert ermittelt wird gemäß

$$Ith = \sqrt{\frac{1}{a} \cdot (Ip^2 + Iq^2) + (k1 \cdot Ip \cdot f(\frac{Vconv}{Vdc}) + k2 \cdot Ik)}$$

wobei

- Ip den oben genannten Wirkleistungsstromwert bezeichnet und durch den Betrag oder die Amplitude des Wirkleistungsstromanteils des über den Wechselspannungsanschluss (W1, W2, W3) fließenden Phasenstroms gebildet wird,
- Iq den oben genannten Blindleistungsstromwert bezeichnet und durch den Betrag oder die Amplitude des Blindleistungsstromanteils des über den Wechselspannungsanschluss (W1, W2, W3) fließenden Phasenstroms gebildet wird,
- Vconv den Betrag oder die Amplitude der Spannung an dem Wechselspannungsanschluss (W1, W2, W3) bezeichnet,
- Vdc den Betrag oder die Amplitude der Gleichspannung auf der Gleichspannungsseite (G10) bezeichnet,
- $f(\frac{Vconv}{Vdc})$ eine vorgegebene Funktion eines Quotienten aus dem Betrag oder der Amplitude der Spannung an dem Wechselspannungsanschluss (W1, W2, W3) und der Gleichspannung auf der Gleichspannungsseite (G10) bezeichnet,
- Ik den Kreisstromwert bezeichnet und durch den Betrag oder die Amplitude des größten reihenschaltungsbezogenen Kreisstroms gebildet wird und

- a, k1 und k2 vorgegebene Konstanten sind.

2. Verfahren nach Anspruch 1,
**d a dur c h gekennzeichnet**, dass
der Kreisstromwert ermittelt wird, indem für jede der Reihenschaltungen (RES1, RES2, RES3) jeweils der dort fließende, also reihenschaltungsbezogene Kreisstrom ermittelt wird, der betragsmäßig größte reihenschaltungsbezogene Kreisstrom bestimmt wird und der Betrag oder die Amplitude dieses größten reihenschaltungsbezogenen Kreisstroms als der Kreisstromwert angesehen wird.

3. Verfahren nach einem der voranstehenden Ansprüche,
**dadurch gekennzeichnet, dass**

die reihenschaltungsbezogenen Kreisströme berechnet werden gemäß

$$Iki(t) = (Ipi(t)+Iqi(t))/2 + Idc(t)/n - Iai(t)$$

falls Armströme zwischen dem positiven Gleichspannungsanschluss der Gleichspannungsseite und den Wechselspannungsanschlüssen fließen,

wobei

- Iki(t) den von der Zeit t abhängigen reihenschaltungsbezogenen Kreisstrom in der i-ten Reihenschaltung (RES1, RES2, RES3) bzw. dem i-ten Umrichterarm bezeichnet,
- Ipi(t) den von der Zeit t abhängigen Wirkleistungsstrom, der über den an die i-te Reihenschaltung (RES1, RES2, RES3) bzw. an den i-ten Umrichterarm angeschlossenen Wechselspannungsanschluss (W1, W2, W3) fließt, bezeichnet,
- Iqi(t) den von der Zeit t abhängigen Blindleistungsstrom, der über den an die i-te Reihenschaltung (RES1, RES2, RES3) bzw. an den i-ten Umrichterarm angeschlossenen Wechselspannungsanschluss (W1, W2, W3) fließt, bezeichnet,
- Idc(t) den von der Zeit t abhängigen und auf der Gleichspannungsseite (G10) fließenden Gleichstrom bezeichnet,
- Iai(t) den von der Zeit t abhängigen Armstrom bezeichnet, der zwischen dem positiven Gleichspannungsanschluss der Gleichspannungsseite (G10) und dem an den i-ten Umrichterarm angeschlossenen Wechselspannungsanschluss (W1, W2, W3) fließt, und
- n die Anzahl der Reihenschaltungen (RES1, RES2, RES3) bzw. Umrichterarme bezeichnet.

4. Verfahren nach einem der voranstehenden Ansprüche,
**dadurch gekennzeichnet, dass**

die reihenschaltungsbezogenen Kreisströme berechnet werden gemäß

$$Iki(t) = -(Ipi(t)+Iqi(t))/2 + Idc(t)/n - Iai(t)$$

falls Armströme zwischen den Wechselspannungsanschlüssen und dem negativen Gleichspannungsanschluss der Gleichspannungsseite fließen,

wobei

- Iki(t) den reihenschaltungsbezogenen Kreisstrom in der i-ten Reihenschaltung (RES1, RES2, RES3) bzw. dem i-ten Umrichterarm bezeichnet,
- Ipi(t) den von der Zeit t abhängigen Wirkleistungsstrom, der über den an die i-te Reihenschaltung (RES1, RES2, RES3) bzw. an den i-ten Umrichterarm angeschlossenen Wechselspannungsanschluss (W1, W2, W3) fließt, bezeichnet,
- Iqi(t) den von der Zeit t abhängigen Blindleistungsstrom, der über den an die i-te Reihenschaltung (RES1, RES2, RES3) bzw. an den i-ten Umrichterarm angeschlossenen Wechselspannungsanschluss (W1, W2, W3) fließt, bezeichnet,

- Idc(t) den von der Zeit t abhängigen und auf der Gleichspannungsseite (G10) fließenden Gleichstrom bezeichnet,
- Iai(t) den von der Zeit t abhängigen Armstrom bezeichnet, der zwischen dem an den i-ten Umrichterarm angeschlossenen Wechselspannungsanschluss (W1, W2, W3) und dem negativen Gleichspannungsanschluss der Gleichspannungsseite (G10) fließt, und
- n die Anzahl der Reihenschaltungen (RES1, RES2, RES3) bzw. Umrichterarme bezeichnet.

5. Verfahren nach einem der voranstehenden Ansprüche,
**dadurch gekennzeichnet, dass**
die Steuerung des Umrichters (10) derart erfolgt, dass der Belastungswert einen vorgegebenen Belastungsgrenzwert unterschreitet oder zumindest nicht überschreitet.

6. Verfahren nach einem der voranstehenden Ansprüche,
**dadurch gekennzeichnet, dass**

der Belastungsgrenzwert ermittelt wird unter Heranziehung eines den Belastungswert betreffenden Integrals, insbesondere gemäß

$$Ith\max = f(\int Ith(t)^2\, dt)$$

wobei Ith(t) den Belastungswert über der Zeit t und f eine vorgegebene Funktion des über das Quadrat des Belastungswerts gebildeten Integrals bezeichnet.

7. Verfahren nach einem der voranstehenden Ansprüche,
**dadurch gekennzeichnet, dass**
der Belastungsgrenzwert reduziert wird, wenn die Temperatur des Umrichters (10) eine vorgegebene Maximaltemperatur erreicht oder überschreitet.

8. Verfahren nach einem der voranstehenden Ansprüche,
**dadurch gekennzeichnet, dass**
die Steuerung des Umrichters (10) im Falle, dass der Belastungswert den vorgegebenen Belastungsgrenzwert erreicht oder überschreitet, die gezielte Reduktion des Wirkleistungsstroms einschließt.

9. Verfahren nach einem der voranstehenden Ansprüche,
**dadurch gekennzeichnet, dass**

die Steuerung des Umrichters (10) im Falle, dass der Belastungswert den vorgegebenen Belastungsgrenzwert erreicht oder überschreitet, so erfolgt, dass der Wirkleistungsstromwert einen vorgegebenen Wirkleistungsmaximalstromwert nicht überschreitet, wobei der Wirkleistungsmaximalstromwert anhand folgender Bedingungsgleichung ermittelt wird:

$$Ith\max = \sqrt{\frac{1}{a}\cdot(Ip\max^2 + Iq^2) + (k1\cdot Ip\max\cdot f(\frac{Vconv}{Vdc}) + k2\cdot Ik)}$$

wobei Ithmax den vorgegebenen Belastungsgrenzwert und Ipmax den Wirkleistungsmaximalstromwert bezeichnet.

10. Verfahren nach einem der voranstehenden Ansprüche,
**dadurch gekennzeichnet, dass**

die Steuerung des Umrichters (10) im Falle, dass der Belastungswert den vorgegebenen Belastungsgrenzwert erreicht oder überschreitet, so erfolgt, dass der Wirkleistungsstromwert einen vorgegebenen Wirkleistungsmaximalstromwert nicht überschreitet,
wobei der Wirkleistungsmaximalstromwert ermittelt wird gemäß

$$Ip\max = \sqrt{\frac{2Ith\max^2 - Iq^2}{1 + 2(k1 \cdot Vconv / Vdc)^2} - \frac{2 \cdot k1 \cdot k2 \cdot |Ik| \cdot (Vconv / Vdc)}{1 + 2(k1 \cdot Vconc / Vdc)^2}}$$

wobei Ithmax den vorgegebenen Belastungsgrenzwert und Ipmax den Wirkleistungsmaximalstromwert bezeichnet.

11. Verfahren nach einem der voranstehenden Ansprüche 1 bis 8,
**dadurch gekennzeichnet, dass**
die Steuerung des Umrichters (10) im Falle, dass der Belastungswert den vorgegebenen Belastungsgrenzwert erreicht oder überschreitet, die gezielte Reduktion des Blindleistungsstroms einschließt.

12. Verfahren nach Anspruch 11,
**dadurch gekennzeichnet, dass**

die Steuerung des Umrichters (10) derart erfolgt, dass der Blindleistungsstromwert einen vom Belastungswert abhängigen Blindleistungsmaximalstromwert unterschreitet oder zumindest nicht überschreitet, wobei der Blindleistungsmaximalstromwert anhand folgender Bedingungsgleichung ermittelt wird:

$$Ith\max = \sqrt{\frac{1}{a} \cdot (Ip^2 + Iq\max^2) + (k1 \cdot Ip \cdot f(\frac{Vconv}{Vdc}) + k2 \cdot Ik)}$$

wobei Ithmax den vorgegebenen Belastungsgrenzwert und Iqmax den Blindleistungsmaximalstromwert bezeichnet.

13. Verfahren nach einem der voranstehenden Ansprüche 11 bis 12,
**dadurch gekennzeichnet, dass**

die Steuerung des Umrichters (10) im Falle, dass der Belastungswert den vorgegebenen Belastungsgrenzwert erreicht oder überschreitet, so erfolgt, dass der Blindleistungsstromwert einen vorgegebenen Blindleistungsmaximalstromwert nicht überschreitet, wobei der Blindleistungsmaximalstromwert ermittelt wird gemäß

$$Iq\max = \sqrt{2 \cdot Ith\max^2 - Ip^2 - 2 \cdot (k1 \cdot Ip \cdot \frac{Vconv}{Vdc} + k2 \cdot Ik)^2}$$

wobei Ithmax den vorgegebenen Belastungsgrenzwert und Iqmax den Blindleistungsmaximalstromwert bezeichnet.

14. Elektrischer Umrichter (10), der eine zumindest zweiphasige Wechselspannungsseite mit zumindest zwei Wechselspannungsanschlüssen (W1, W2, W3), eine Gleichspannungsseite (G10) und zumindest zwei parallel geschaltete Reihenschaltungen (RES1, RES2, RES3) aufweist,

- wobei jede der Reihenschaltungen (RES1, RES2, RES3) jeweils einen Umrichterarm des Umrichters (10) bildet und einem der Wechselspannungsanschlüsse (W1, W2, W3) auf der Wechselspannungsseite des Umrichters (10) zugeordnet ist und
- wobei zwischen den zumindest zwei parallel geschalteten Reihenschaltungen (RES1, RES2, RES3) ein oder mehrere Kreisströme fließen können, und wobei
- der Umrichter (10) eine Steuereinrichtung (20) aufweist, die einen die thermische Belastung des Umrichters (10) beschreibenden Belastungswert in Abhängigkeit von zumindest drei Stromwerten errechnet, nämlich
- einem Wirkleistungsstromwert, der den Wirkleistungsstromanteil eines über einen der Wechselspannungsanschlüsse (W1, W2, W3) fließenden Phasenstroms angibt,
- einem Blindleistungsstromwert, der den Blindleistungsstromanteil des über den zuvor genannten Wechselspannungsanschluss (W1, W2, W3) fließenden Phasenstroms angibt, und
- einem Kreisstromwert, der die Größe des oder der zwischen den Reihenschaltungen (RES1, RES2, RES3) fließenden Kreisströme angibt, und

- die Steuereinrichtung (20) die Steuerung des Umrichters (10) zumindest auch unter Berücksichtigung dieses Belastungswerts durchführt,

**dadurch gekennzeichnet, dass**

die Steuereinrichtung den sich zeitlich ändernden Belastungswert errechnet gemäß

$$Ith = \sqrt{\frac{1}{a} \cdot (Ip^2 + Iq^2) + (k1 \cdot Ip \cdot f(\frac{Vconv}{Vdc}) + k2 \cdot Ik)}$$

wobei

- Ip den oben genannten Wirkleistungsstromwert bezeichnet und durch den Betrag oder die Amplitude des Wirkleistungsstromanteils des über den Wechselspannungsanschluss (W1, W2, W3) fließenden Phasenstroms gebildet wird,
- Iq den oben genannten Blindleistungsstromwert bezeichnet und durch den Betrag oder die Amplitude des Blindleistungsstromanteils des über den Wechselspannungsanschluss (W1, W2, W3) fließenden Phasenstroms gebildet wird,
- Vconv den Betrag oder die Amplitude der Spannung an dem Wechselspannungsanschluss (W1, W2, W3) bezeichnet,
- Vdc den Betrag oder die Amplitude der Gleichspannung auf der Gleichspannungsseite (G10) bezeichnet,
- $f(\frac{Vconv}{Vdc})$ eine vorgegebene Funktion eines Quotienten aus dem Betrag oder der Amplitude der Spannung an dem Wechselspannungsanschluss (W1, W2, W3) und der Gleichspannung auf der Gleichspannungsseite (G10) bezeichnet,
- Ik den Kreisstromwert bezeichnet und durch den Betrag oder die Amplitude des größten reihenschaltungsbezogenen Kreisstroms gebildet wird und
- a, k1 und k2 vorgegebene Konstanten sind.

**Claims**

1. Method for operating an electrical converter (10) that has an at least two-phase AC voltage side having at least two AC voltage connections (W1, W2, W3), a DC voltage side (G10) and at least two parallel-connected series circuits (RES1, RES2, RES3),

   - wherein each of the series circuits (RES1, RES2, RES3) in each case forms a converter arm of the converter (10) and is assigned to one of the AC voltage connections (W1, W2, W3) on the AC voltage side of the converter (10) and
   - wherein one or more circuit currents are able to flow between the at least two parallel-connected series circuits (RES1, RES2, RES3), wherein
   - a loading value describing the thermal loading of the converter (10) is calculated on the basis of at least three current values, specifically
   - an active power current value that indicates the active power current component of a phase current flowing through one of the AC voltage connections (W1, W2, W3),
   - a reactive power current value that indicates the reactive power current component of the phase current flowing through the abovementioned AC voltage connection (W1, W2, W3), and
   - a circuit current value that indicates the magnitude of the one or more circuit currents flowing between the series circuits (RES1, RES2, RES3), and
   - the converter (10) is controlled at least also taking into consideration this loading value,

   **characterized in that**
   the temporally changing loading value is ascertained in accordance with

$$Ith = \sqrt{\frac{1}{a} \cdot (Ip^2 + Iq^2) + (k1 \cdot Ip \cdot f(\frac{Vconv}{Vdc}) + k2 \cdot Ik)}$$

wherein

- Ip denotes the abovementioned active power current value and is formed by the absolute value or the amplitude of the active power current component of the phase current flowing through the AC voltage connection (W1, W2, W3),
- Iq denotes the abovementioned reactive power current value and is formed by the absolute value or the amplitude of the reactive power current component of the phase current flowing through the AC voltage connection (W1, W2, W3),
- Vconv denotes the absolute value or the amplitude of the voltage at the AC voltage connection (W1, W2, W3),
- Vdc denotes the absolute value or the amplitude of the DC voltage on the DC voltage side (G10),
- $f(\dfrac{Vconv}{Vdc})$ denotes a predefined function of a quotient formed from the absolute value or the amplitude of the voltage at the AC voltage connection (W1, W2, W3) and the DC voltage on the DC voltage side (G10),
- Ik denotes the circuit current value and is formed by the absolute value or the amplitude of the greatest series circuit-related circuit current, and
- a, k1 and k2 are predefined constants.

2. Method according to Claim 1,
   **characterized in that**
   the circuit current value is ascertained by ascertaining, for each of the series circuits (RES1, RES2, RES3), in each case the circuit current flowing there, that is to say series circuit-related circuit current, by determining the greatest series circuit-related circuit current in terms of absolute value and by considering the absolute value or the amplitude of this greatest series circuit-related circuit current as the circuit current value.

3. Method according to either of the preceding claims,
   **characterized in that**

   the series circuit-related circuit currents are calculated in accordance with

$$Iki(t) = (Ipi(t)+Iqi(t))/2 + Idc(t)/n - Iai(t)$$

   if arm currents flow between the positive DC voltage connection of the DC voltage side and the AC voltage connections,

   wherein

   - Iki(t) denotes the series circuit-related circuit current, dependent on time t, in the ith series circuit (RES1, RES2, RES3) or the ith converter arm,
   - Ipi(t) denotes the active power current, dependent on time t, flowing through the AC voltage connection (W1, W2, W3) connected to the ith series circuit (RES1, RES2, RES3) or to the ith converter arm,
   - Iqi(t) denotes the reactive power current, dependent on time t, flowing through the AC voltage connection (W1, W2, W3) connected to the ith series circuit (RES1, RES2, RES3) or to the ith converter arm,
   - Idc(t) denotes the DC current dependent on time t and flowing on the DC voltage side (G10),
   - Iai(t) denotes the arm current, dependent on time t, flowing between the positive DC voltage connection of the DC voltage side (G10) and the AC voltage connection (W1, W2, W3) connected to the ith converter arm, and
   - n denotes the number of series circuits (RES1, RES2, RES3) or converter arms.

4. Method according to one of the preceding claims,
   **characterized in that**

   the series circuit-related circuit currents are calculated in accordance with

$$Iki(t) = -(Ipi(t)+Iqi(t))/2 + Idc(t)/n - Iai(t)$$

   if arm currents flow between the AC voltage connections and the negative DC voltage connection of the DC voltage side,

wherein

- Iki(t) denotes the series circuit-related circuit current in the ith series circuit (RES1, RES2, RES3) or the ith converter arm,
- Ipi(t) denotes the active power current, dependent on time t, flowing through the AC voltage connection (W1, W2, W3) connected to the ith series circuit (RES1, RES2, RES3) or to the ith converter arm,
- Iqi(t) denotes the reactive power current, dependent on time t, flowing through the AC voltage connection (W1, W2, W3) connected to the ith series circuit (RES1, RES2, RES3) or to the ith converter arm,
- Idc(t) denotes the DC current dependent on time t and flowing on the DC voltage side (G10),
- Iai(t) denotes the arm current, dependent on time t, flowing between the AC voltage connection (W1, W2, W3) connected to the ith converter arm and the negative DC voltage connection of the DC voltage side (G10), and
- n denotes the number of series circuits (RES1, RES2, RES3) or converter arms.

5.  Method according to one of the preceding claims,
    **characterized in that**
    the converter (10) is controlled such that the loading value falls below or at least does not exceed a predefined loading limit value.

6.  Method according to one of the preceding claims,
    **characterized in that**

    the loading limit value is ascertained by applying an integral relating to the loading value, in particular in accordance with

    $$Ith\max = f(\int Ith(t)^2\, dt)$$

    wherein Ith(t) denotes the loading value over time t and f denotes a predefined function of the integral formed via the square of the loading value.

7.  Method according to one of the preceding claims,
    **characterized in that**
    the loading limit value is reduced when the temperature of the converter (10) reaches or exceeds a predefined maximum temperature.

8.  Method according to one of the preceding claims,
    **characterized in that**
    the control of the converter (10), in the event that the loading value reaches or exceeds the predefined loading limit value, incorporates the targeted reduction of the active power current.

9.  Method according to one of the preceding claims,
    **characterized in that**

    the converter (10), in the event that the loading value reaches or exceeds the predefined loading limit value, is controlled such that the active power current value does not exceed a predefined active power maximum current value, wherein the active power maximum current value is ascertained on the basis of the following conditional equation:

    $$Ith\max = \sqrt{\frac{1}{a}\cdot(Ip\max^2 + Iq^2) + (k1\cdot Ip\max\cdot f(\frac{Vconv}{Vdc}) + k2\cdot Ik)}$$

    wherein Ithmax denotes the predefined loading limit value and Ipmax denotes the active power maximum current value.

10. Method according to one of the preceding claims,

**characterized in that**

the converter (10), in the event that the loading value reaches or exceeds the predefined loading limit value, is controlled such that the active power current value does not exceed a predefined active power maximum current value, wherein the active power maximum current value is ascertained in accordance with

$$Ip\max = \sqrt{\frac{2Ith\max^2 - Iq^2}{1 + 2(k1 \cdot Vconv/Vdc)^2}} - \frac{2 \cdot k1 \cdot k2 \cdot |Ik| \cdot (Vconv/Vdc)}{1 + 2(k1 \cdot Vconc/Vdc)^2}$$

wherein Ithmax denotes the predefined loading limit value and Ipmax denotes the active power maximum current value.

11. Method according to one of preceding Claims 1 to 8,
    **characterized in that**
    the control of the converter (10), in the event that the loading value reaches or exceeds the predefined loading limit value, incorporates the targeted reduction of the reactive power current.

12. Method according to Claim 11,
    **characterized in that**
    the converter (10) is controlled such that the reactive power current value falls below or at least does not exceed a reactive power maximum current value dependent on the loading value, wherein the reactive power maximum current value is ascertained on the basis of the following conditional equation:

$$Ith\max = \sqrt{\frac{1}{a} \cdot (Ip^2 + Iq\max^2) + (k1 \cdot Ip \cdot f(\frac{Vconv}{Vdc}) + k2 \cdot Ik)}$$

wherein Ithmax denotes the predefined loading limit value and Iqmax denotes the reactive power maximum current value.

13. Method according to either of preceding Claims 11 and 12,
    **characterized in that**

    the converter (10), in the event that the loading value reaches or exceeds the predefined loading limit value, is controlled such that the reactive power current value does not exceed a predefined reactive power maximum current value, wherein the reactive power maximum current value is ascertained in accordance with

$$Iq\max = \sqrt{2 \cdot Ith\max^2 - Ip^2 - 2 \cdot (k1 \cdot Ip \cdot \frac{Vconv}{Vdc} + k2 \cdot Ik)^2}$$

wherein Ithmax denotes the predefined loading limit value and Iqmax denotes the reactive power maximum current value.

14. Electrical converter (10) that has an at least two-phase AC voltage side having at least two AC voltage connections (W1, W2, W3), a DC voltage side (G10) and at least two parallel-connected series circuits (RES1, RES2, RES3),

    - wherein each of the series circuits (RES1, RES2, RES3) in each case forms a converter arm of the converter (10) and is assigned to one of the AC voltage connections (W1, W2, W3) on the AC voltage side of the converter (10) and
    - wherein one or more circuit currents are able to flow between the at least two parallel-connected series circuits (RES1, RES2, RES3), and wherein
    - the converter (10) has a control device (20) that calculates a loading value describing the thermal loading of the converter (10) on the basis of at least three current values, specifically
    - an active power current value that indicates the active power current component of a phase current flowing through one of the AC voltage connections (W1, W2, W3),

- a reactive power current value that indicates the reactive power current component of the phase current flowing through the abovementioned AC voltage connection (W1, W2, W3), and
- a circuit current value that indicates the magnitude of the one or more circuit currents flowing between the series circuits (RES1, RES2, RES3), and
- the control device (20) controls the converter (10) at least also taking into consideration this loading value,

**characterized in that**
the control device calculates the temporally changing loading value in accordance with

$$Ith = \sqrt{\frac{1}{a} \cdot (Ip^2 + Iq^2) + (k1 \cdot Ip \cdot f(\frac{Vconv}{Vdc}) + k2 \cdot Ik)}$$

wherein

- Ip denotes the abovementioned active power current value and is formed by the absolute value or the amplitude of the active power current component of the phase current flowing through the AC voltage connection (W1, W2, W3),
- Iq denotes the abovementioned reactive power current value and is formed by the absolute value or the amplitude of the reactive power current component of the phase current flowing through the AC voltage connection (W1, W2, W3),
- Vconv denotes the absolute value or the amplitude of the voltage at the AC voltage connection (W1, W2, W3),
- Vdc denotes the absolute value or the amplitude of the DC voltage on the DC voltage side (G10),
- $f(\frac{Vconv}{Vdc})$ denotes a predefined function of a quotient formed from the absolute value or the amplitude of the voltage at the AC voltage connection (W1, W2, W3) and the DC voltage on the DC voltage side (G10),
- Ik denotes the circuit current value and is formed by the absolute value or the amplitude of the greatest series circuit-related circuit current, and
- a, k1 and k2 are predefined constants.

**Revendications**

1. Procédé pour faire fonctionner un onduleur (10) électrique, qui a un côté de tension alternative au moins biphasé ayant au moins deux bornes (W1, W2, W3) de tension alternative, un côté (G10) de tension continue et au moins deux circuits (RES1, RES2, RES3) série montés en parallèle,

- dans lequel chacun des circuits (RES1, RES2, RES3) série forment respectivement un bras de l'onduleur (10) et est associé à l'une des bornes (W1, W2, W3) de tension alternative, du côté de la tension alternative de l'onduleur (10),
- dans lequel un ou plusieurs courants circulaires peuvent passer entre les au moins deux circuits (RES1, RES2, RES3) série montés en parallèle, dans lequel
- on calcule une valeur de charge, décrivant la charge thermique de l'onduleur (10), en fonction d'au moins trois valeurs de courant, à savoir
- une valeur de courant de puissance active, qui indique la composante de courant de puissance active d'un courant de phase passant par l'une des bornes (W1, W2, W3) de tension alternative,
- une valeur de courant de puissance réactive, qui indique la composante de courant de puissance réactive du courant de phase passant par la borne (W1, W2, W3) de tension alternative mentionnée précédemment, et
- une valeur de courant circulaire, qui indique la valeur du ou des courants circulaires passant entre les circuits (RES1, RES2, RES3) série, et
- la commande de l'onduleur (10) s'effectue au moins également en tenant compte de cette valeur de charge,

**caractérisé en ce que** l'on détermine la valeur de charge, qui varie avec le temps, suivant

$$Ith = \sqrt{\frac{1}{a} \cdot (Ip^2 + Iq^2) + (k1 \cdot Ip \cdot f(\frac{Vconv}{Vdc}) + k2 \cdot Ik)}$$

dans laquelle

- Ip désigne la valeur de courant de puissance active mentionnée ci-dessus et on le forme par la valeur absolue ou l'amplitude de la composante de courant de puissance active du courant de phase passant par la borne (W1, W2, W3) de tension alternative,
- Iq désigne la valeur de courant de puissance réactive mentionnée ci-dessus et on le forme par la valeur absolue ou par l'amplitude de la composante de puissance réactive du courant de phase passant par la borne (W1, W2, W3) de tension alternative,
- Vconv désigne la valeur absolue ou l'amplitude de la tension à la borne (W1, W2, W3) de la tension alternative,
- Vdc désigne la valeur absolue ou l'amplitude de la tension continue du côté (G10) de la tension continue,
- $f\left(\dfrac{Vconv}{Vdc}\right)$ désigne une fonction donnée à l'avance d'un quotient de la valeur absolue ou de l'amplitude de la tension à la borne (W1, W2, W3) de la tension alternative par la tension continue du côté (G10) de la tension continue,
- Ik désigne la valeur du courant circulaire et on le forme par la valeur absolue ou par l'amplitude du courant circulaire, le plus grand rapporté au circuit série, et
- a, k1 et k2 sont des constantes données à l'avance.

2. Procédé suivant la revendication 1,
**caractérisé en ce que**
l'on détermine la valeur du courant circulaire en déterminant, pour chaque circuit (RES1, RES2, RES3) série respectivement le courant circulaire, qui y passe, donc rapporté au circuit série, en déterminant le courant circulaire le plus grand en valeur absolue rapporté au circuit série, et en considérant comme étant la valeur du courant circulaire, la valeur absolue de ce courant circulaire le plus grand rapporté au circuit série.

3. Procédé suivant l'une des revendications précédentes, **caractérisé en ce que**

l'on calcule les courants circulaires rapportés au circuit série suivant

$$\text{Iki(t) = (Ipi(t)+Iqi(t))/2 + Idc(t)/n - Iai(t)}$$

si les courants de bras passent entre la borne positive de la tension continue du côté de la tension continue et les bornes de la tension alternative,

dans lequel

- Iki(t) désigne le courant circulaire, rapporté au circuit série, qui varie en fonction du temps t dans le ième circuit (RES1, RES2, RES3) série ou dans le ième bras de l'onduleur,
- Ipi(t) désigne le courant de puissance active en fonction du temps t et qui passe par la borne (W1, W2, W3) de tension alternative raccordée au ième circuit (RES1, RES2, RES3) série ou au ième bras de l'onduleur,
- Iqi(t) désigne le courant de puissance réactive, qui varie en fonction du temps t et qui passe par la borne (W1, W2, W3) de tension alternative raccordée au ième circuit (RES1, RES2, RES3) série ou ième bras de l'onduleur,
- Idc(t) désigne le courant continu, qui varie en fonction du temps t et qui passe du côté (G10) de la tension continue,
- Iai(t) désigne le courant de bras, qui varie en fonction du temps t et qui passe entre la borne positive de tension continue du côté (G10) de la tension continue et la borne (W1, W2, W3) de tension alternative raccordée au ième bras de l'onduleur, et
- n désigne le nombre des circuits (RES1,RES2, RES3) série ou des bras de l'onduleur.

4. Procédé suivant l'une des revendications précédentes,
**caractérisé en ce que**

l'on calcule les courants circulaires rapportés au circuit série suivant

$$\text{Iki(t) = -(Ipi(t)+Iqi(t))/2 + Idc(t)/n - Iai(t)}$$

si des courants de bras passent entre les bornes de la tension alternative de la tension continue du côté de la tension continue,

dans lequel

- Iki(t) désigne le courant circulaire, rapporté au circuit série, dans le ième circuit (RES1, RES2, RES3) série ou dans le ième bras de l'onduleur,
- Ipi(t) désigne le courant de puissance active, qui varie en fonction du temps t et qui passe par la borne (W1, W2, W3) de tension alternative raccordée au ième circuit (RES1, RES2, RES3) série ou au ième bras de l'onduleur,
- Iqi(t) désigne le courant de puissance réactive, qui varie en fonction du temps t et qui passe par la borne (W1, W2, W3) de tension alternative raccordée au ième circuit (RES1, RES2, RES3) série ou ième bras de l'onduleur,
- Idc(t) désigne le courant continu, qui dépend du temps t et qui passe du côté (G10) de la tension continue,
- Iai(t) désigne le courant de bras, qui varie en fonction du temps t et qui passe entre la borne (W1, W2, W3) de tension alternative raccordée au ième bras de l'onduleur et la borne négative de la tension continue du côté (G10) de la tension continue,
- n désigne le nombre des circuits (RES1, RES2, RES3) série ou des bras de l'onduleur.

5. Procédé suivant l'une des revendications précédentes,
**caractérisé en ce que**
la commande de l'onduleur (10) s'effectue, de manière à ce que la valeur de la charge soit inférieure ou du moins ne dépasse pas une valeur limite de charge donnée à l'avance.

6. Procédé suivant l'une des revendications précédentes,
**caractérisé en ce que**

l'on détermine la valeur limite de la charge en tirant parti d'une intégrale concernant la valeur de la charge, en particulier suivant

$$Ith\max = f(\int Ith(t)^2 dt)$$

dans laquelle Ith(t) désigne la valeur de la charge en fonction du temps t et f est une fonction donnée à l'avance de l'intégrale formée par le carré de la valeur de la charge.

7. Procédé suivant l'une des revendications précédentes,
**caractérisé en ce que**
l'on réduit la valeur limite de la charge si la température de l'onduleur (10) atteint ou dépasse une température maximum donnée à l'avance.

8. Procédé suivant l'une des revendications précédentes,
**caractérisé en ce que**
la commande de l'onduleur (10) inclut, dans le cas où la valeur de la charge atteint ou dépasse la valeur limite de la charge donnée à l'avance, la réduction ciblée du courant de puissance active.

9. Procédé suivant l'une des revendications précédentes,
**caractérisé en ce que**

la commande de l'onduleur (10), dans le cas où la valeur de la charge atteint ou dépasse la valeur limite de la charge donnée à l'avance, s'effectue de manière à ce que la valeur du courant de puissance active ne dépasse pas une valeur de courant maximum de puissance active donnée à l'avance, dans lequel on détermine la valeur de courant maximum de puissance réactive, à l'aide de l'équation de condition suivante

$$Ith\max = \sqrt{\frac{1}{a} \cdot (Ip\max^2 + Iq^2) + (k1 \cdot Ip\max \cdot f(\frac{Vconv}{Vdc}) + k2 \cdot Ik)}$$

dans laquelle Ithmax désigne la valeur limite de charge donnée et Ipmax la valeur de courant maximum de puissance active.

10. Procédé suivant l'une des revendications précédentes,
**caractérisé en ce que**

la commande de l'onduleur (10), dans le cas où la valeur de la charge atteint ou dépasse la valeur limite de la charge donnée à l'avance, s'effectue de manière à ce que la valeur du courant de puissance active ne dépasse pas une valeur de courant maximum de puissance active donnée à l'avance,
dans lequel on détermine la valeur de courant maximum de puissance active suivant

$$Ip\max = \sqrt{\frac{2Ith\max^2 - Iq^2}{1 + 2(k1 \cdot Vconv/Vdc)^2} - \frac{2 \cdot k1 \cdot k2 \cdot |Ik| \cdot (Vconv/Vdc)}{1 + 2(k1 \cdot Vconc/Vdc)^2}}$$

dans laquelle Ithmax désigne la valeur limite de la charge donnée à l'avance et Ipmax la valeur du courant maximum de puissance active.

11. Procédé suivant l'une des revendications 1 à 8 précédentes,
**caractérisé en ce que**
la commande de l'onduleur (10), dans le cas où la valeur de la charge atteint ou dépasse la valeur limite de la charge donnée à l'avance, inclut la réduction ciblée du courant de puissance réactive.

12. Procédé suivant la revendication 11,
**caractérisé en ce que**

la commande de l'onduleur (10) s'effectue de manière à ce que la valeur du courant de puissance réactive soit inférieure ou au moins ne dépasse une valeur de courant maximum de puissance réactive, qui dépend de la charge, dans lequel on détermine la valeur de courant maximum de la puissance réactive, à l'aide de l'équation de condition suivante

$$Ith\max = \sqrt{\frac{1}{a} \cdot (Ip^2 + Iq\max^2) + (k1 \cdot Ip \cdot f(\frac{Vconv}{Vdc}) + k2 \cdot Ik)}$$

dans laquelle Ithmax désigne la valeur limite de la charge donnée à l'avance et Iqmax la valeur du courant maximum de puissance réactive.

13. Procédé suivant l'une des revendications 11 à 12 précédentes,
**caractérisé en ce que**

la commande de l'onduleur (10), dans le cas où la valeur de la charge atteint ou dépasse la valeur limite de la charge donnée à l'avance, s'effectue de manière à ce que la valeur du courant de puissance réactive ne dépasse pas une valeur du courant maximum de la puissance réactive donnée à l'avance, dans lequel on détermine la valeur du courant maximum de la puissance réactive suivant

$$Iq\max = \sqrt{2 \cdot Ith\max^2 - Ip^2 - 2 \cdot (k1 \cdot Ip \cdot \frac{Vconv}{Vdc} + k2 \cdot Ik)^2}$$

dans lequel Ithmax désigne la valeur limite de la charge donnée à l'avance et Iqmax la valeur maximum de la puissance réactive.

14. Onduleur (10) électrique, qui a un côté de tension alternative au moins biphasé ayant au moins deux bornes (W1, W2, W3) de tension alternative, un côté (G10) de tension continue et au moins deux circuits (RES1, RES2, RES3) série montés en parallèle,

- dans lequel chacun des circuits (RES1, RES2, RES3) série forment respectivement un bras de l'onduleur (10) et est associé à l'une des bornes (W1, W2, W3) de tension alternative, du côté de la tension alternative de l'onduleur (10), et
- dans lequel un ou plusieurs courants circulaires peuvent passer entre les au moins deux circuits (RES1, RES2, RES3) série montés en parallèle, et dans lequel
- l'onduleur (10) a un dispositif (20) de commande, qui calcule une valeur de charge, décrivant la charge thermique de l'onduleur (10), en fonction d'au moins trois valeurs de courant, à savoir
- une valeur de courant de puissance active, qui indique la composante de courant de puissance active d'un courant de phase passant par l'une des bornes (W1, W2, W3) de tension alternative,
- une valeur de courant de puissance réactive, qui indique la composante de courant de puissance réactive du courant de phase passant par la borne (W1, W2, W3) de tension alternative mentionnée précédemment, et
- une valeur de courant circulaire, qui indique la valeur du ou des courants circulaires passant entre les circuits (RES1, RES2, RES3) série, et
- le dispositif (20) de commande effectue la commande de l'onduleur (10) au moins également en tenant compte de cette valeur de charge,

**caractérisé en ce que**
on détermine la valeur de charge, qui varie en fonction du temps suivant

$$Ith = \sqrt{\frac{1}{a} \cdot (Ip^2 + Iq^2) + (k1 \cdot Ip \cdot f(\frac{Vconv}{Vdc}) + k2 \cdot Ik)}$$

dans laquelle

- Ip désigne la valeur de courant de puissance active mentionnée ci-dessus et on le forme par la valeur absolue ou l'amplitude de la composante de courant de puissance active du courant de phase passant par la borne (W1, W2, W3) de tension alternative,
- Iq désigne la valeur de courant de puissance réactive mentionnée ci-dessus et on le forme par la valeur absolue ou par l'amplitude de la composante de puissance réactive du courant de phase passant par la borne (W1, W2, W3) de tension alternative,
- Vconv désigne la valeur absolue ou l'amplitude de la tension à la borne (W1, W2, W3) de la tension alternative,
- Vdc désigne la valeur absolue ou l'amplitude de la tension continue du côté (G10) de la tension continue,
- $f(\frac{Vconv}{Vdc})$ désigne une fonction donnée à l'avance d'un quotient de la valeur absolue ou de l'amplitude de la tension à la borne (W1, W2, W3) de la tension alternative par la tension continue du côté (G10) de la tension continue,
- Ik désigne la valeur du courant circulaire et on le forme par la valeur absolue ou par l'amplitude du courant circulaire, le plus grand rapporté au circuit série, et
- a, k1 et k2 sont des constantes données à l'avance.

FIG 1

## FIG 2

## FIG 3

FIG 4

EP 3 959 806 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015036149 A1

- CN 104934989 A

**In der Beschreibung aufgeführte Nicht-Patentliteratur**

- Modular Multilevel Converter: An universal concept for HVDC-Networks and extended DC-Bus-Applications. **R. MARQUARDT.** International Power Electronics Conference. IEEE, 2010, 502-507
- Indirect Thermal Control for Improved Reliability of Modular Multilevel Converter by Utilizing Circulating Current. **M. K. BAKHSHIZADEH et al.** IEEE Applied Power Electronics Conference and Exposition (APEC). IEEE, 15. Marz 2015, 2167-2173

- Modular Multilevel Converter: An universal concept for HVDC-Networks and extended DC-Bus-Applications. **R. MARQUARDT.** 2010 International Power Electronics Conference. IEEE, 2010, 502-507